# EUROPEAN PATENT APPLICATION

(11) **EP 4 571 708 A1**
(43) Date of publication of application: **18.06.2025**
(21) Application number: 24219849.7
(22) Date of filing: 13.12.2024
(51) Int. Cl.: G08G 1/16, B60Q 9/00, B60W 30/12, B60W 50/14

(54) **LANE DEPARTURE PREVENTION APPARATUS, LANE DEPARTURE PREVENTION METHOD, AND NON-TRANSITORY STORAGE MEDIUM STORING PROGRAM THEREOF**

(30) Priority: 13.12.2023 JP 2023209930
(71) Applicant: TOYOTA JIDOSHA KABUSHIKI KAISHA, Toyota-shi Aichi 471-8571 (JP)
(72) Inventor: NAGAE, Hajime, TOYOTA-SHI, AICHI, 471-8571 (JP)
(74) Representative: Cabinet Beau de Loménie

(57) **Abstract**

A lane departure prevention apparatus comprises a control unit configured to perform a lane departure prevention operation when there is a probability that the host vehicle (HV) departs from the host lane (HL), and cancel performing the lane departure prevention operation when a turn signal of the host vehicle is in a blinking state. The control unit is configured to permit performing the lane departure prevention operation without cancelling performing the lane departure prevention operation when a rear approaching vehicle (RV) that is positioned in the host lane (HL) and is approaching the host vehicle (HV) from behind is present, even when the turn signal of the host vehicle is in the blinking state.

## Description

### TECHNICAL FIELD

The present disclosure relates to a lane departure prevention apparatus, a lane departure prevention method, and a non-transitory storage medium storing a program thereof, for performing a lane departure prevention control to prevent (suppress) a host vehicle from departing from a host lane in which the host vehicle is traveling.

### BACKGROUND

A conventional lane departure prevention apparatus generates an alert/warning so as to notify a driver that the departure is likely to occur, when a possibility of a lane departure of a vehicle is detected. The conventional lane departure prevention apparatus is configured not to generate the alert if the turn signal (direction indicator) is blinking (flickering) even when the possibility of the lane departure is detected. In addition, when the possibility of the lane departure of a host vehicle is detected, the conventional lane departure prevention apparatus is configured to generate the alert even when the turn signal of the host vehicle is blinking, if a front vehicle that is a vehicle in front of the host vehicle is attempting to overtake another vehicle (refer to Japanese Patent Application Laid-Open No. 2017-111680). This can prevent an occurrence of a situation (i.e., double overtaking) where the host vehicle starts overtaking when the front vehicle is attempting to overtake another vehicle.

Furthermore, there has been known another conventional apparatus that is configured to change a steering angle to a direction to avoid the lane departure, when a possibility of the lane departure is detected.

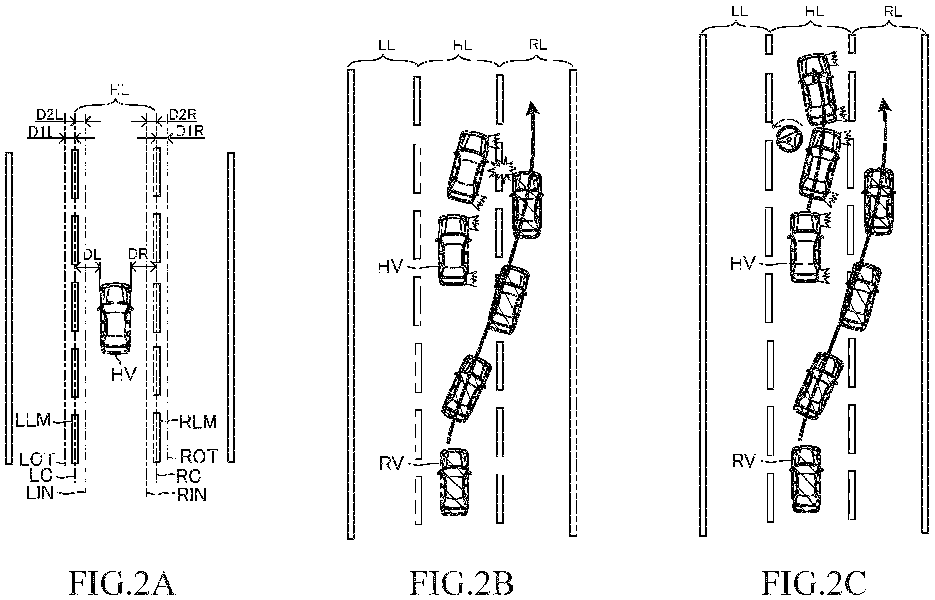

However, the conventional apparatuses are not designed in consideration of how to perform the lane departure prevention control with respect to a vehicle (referred to as a "rear approaching vehicle") that is present in a lane (referred to as a "host lane") in which the host vehicle is traveling and that is approaching the host vehicle from behind. This may cause the following situation. Namely, as shown in FIG. 2B, even when the rear approaching vehicle RV is changing lanes to a lane (referred to as an "adjacent lane") adjacent to the host lane and trying to overtake the host vehicle HV, if the driver of the host vehicle is flickering the turn signal and attempting to change lanes to the same adjacent lane, the conventional apparatus does not perform the lane departure prevention control (i.e., an operation for generating the alert and a steering operation for the lane departure prevention) for preventing the departure from the host lane. Consequently, there is a problem that the host vehicle HV comes too close to the rear approaching vehicle RV, so that the host vehicle HV may obstruct the travel of the rear approaching vehicle RV.

### SUMMARY

The present disclosure is made to cope with the above-described problem. Namely, one of objects of the present disclosure is to provide a lane departure prevention apparatus, a lane departure prevention method, and a non-transitory storage medium storing a program thereof, that can avoid obstructing the travel of the rear approaching vehicle as described above.

One of embodiments of the lane departure prevention apparatus according to present disclosure comprises a control unit configured to perform, as a departure suppression support operation, at least one of an alert generation operation to generate an alert to a driver of a host vehicle and a lane departure prevention operation to apply a force in a direction for avoiding a departure of the host vehicle from a host lane to the host vehicle, when there is a probability that the host vehicle departs from the host lane. The control unit is configured to cancel performing the departure suppression support operation when a turn signal of the host vehicle is in a blinking state.

The control unit is further configured to permit performing the departure suppression support operation without cancelling performing the departure suppression support operation when a rear approaching vehicle that is positioned in the host lane and is approaching the host vehicle from behind is present (or detected), even when the turn signal of the host vehicle is in the blinking state.

According to the above embodiment, the execution of the departure suppression support operation is not cancelled when the rear approaching vehicle is present, and thus, it is likely that the host vehicle is kept in the host lane when the rear approaching vehicle is attempting to overtake the host vehicle. Therefore, a possibility of preventing the host vehicle from coming too close to the rear approaching vehicle is enhanced.

In one of the embodiments according to the present disclosure,
the control unit is configured to:
perform the lane departure prevention operation as the departure suppression support operation;
determine whether or not the rear approaching vehicle is attempting to change lanes to a right adjacent lane that is adjacent to the host lane rightward; and
permit performing at least the lane departure prevention operation for preventing the host vehicle from departing to the right adjacent lane without cancelling the lane departure prevention operation if it is determined that the rear approaching vehicle is attempting to change lanes to the right adjacent lane, even when the turn signal of the host vehicle is in the blinking state.

According to the above embodiment, in a case where the rear approaching vehicle is attempting to overtake the host vehicle after the rear approaching vehicle change lanes to the right adjacent lane, the execution of the lane departure prevention operation for preventing the host vehicle from departing to the right adjacent lane is not cancelled, when the host vehicle is trying to change lanes to the right adjacent lane. Therefore, a possibility of preventing the host vehicle from coming too close to the rear approaching vehicle, in the right adjacent lane, is enhanced.

In one of the embodiments according to the present disclosure,
the control unit is configured to:
perform the lane departure prevention operation as the departure suppression support operation;
determine whether or not the rear approaching vehicle is attempting to change lanes to a left adjacent lane that is adjacent to the host lane leftward; and
permit performing at least the lane departure prevention operation for preventing the host vehicle from departing to the left adjacent lane without cancelling the lane departure prevention operation if it is determined that the rear approaching vehicle is attempting to change lanes to the left adjacent lane, even when the turn signal of the host vehicle is in the blinking state.

According to the above embodiment, in a case where the rear approaching vehicle is attempting to overtake the host vehicle after the rear approaching vehicle change lanes to the left adjacent lane, the execution of the lane departure prevention operation for preventing the host vehicle from departing to the left adjacent lane is not cancelled when the host vehicle is trying to change lanes to the left adjacent lane. Therefore, a possibility of preventing the host vehicle from coming too close to the rear approaching vehicle, in the left adjacent lane, is enhanced.

In one of the embodiments according to the present disclosure,
the control unit is configured to:
perform the lane departure prevention operation as the departure suppression support operation; and
permit performing at least the lane departure prevention operation for preventing the host vehicle from departing to an overtaking lane with respect to the host lane without cancelling the lane departure prevention operation if the rear approaching vehicle is present (detected), even when the turn signal of the host vehicle is in the blinking state.

In most cases, the rear approaching vehicle overtakes the host vehicle after the rear approaching vehicle change lanes to the overtaking lane. According to the above embodiment, it is possible to prevent the host vehicle from departing to at least the overtaking lane when the turn signal of the host vehicle is in the blinking state. Therefore, a possibility of preventing the host vehicle from coming too close to the rear approaching vehicle, in the overtaking lane, is enhanced.

In one of the embodiments according to the present disclosure, the control unit is configured to:
perform the lane departure prevention operation as the departure suppression support operation; and
cancel a rightward departure prevention operation of the lane departure prevention operation, for preventing the host vehicle from departing from the host lane rightward, when a right turn signal among the turn signal is in the blinking state;
determine whether or not the rear approaching vehicle is attempting to change lanes to a right adjacent lane that is adjacent to the host lane rightward;
permit performing at least the rightward departure prevention operation without cancelling performing the rightward departure prevention operation, if the rear approaching vehicle is attempting to change lanes to the right adjacent lane, even when the right turn signal is in the blinking state;
cancel a leftward departure prevention operation of the lane departure prevention operation, for preventing the host vehicle from departing from the host lane leftward, when a left turn signal among the turn signal is in the blinking state;
determine whether or not the rear approaching vehicle is attempting to change lanes to a left adjacent lane that is adjacent to the host lane leftward; and
permit performing at least the leftward departure prevention operation without cancelling performing the leftward departure prevention operation, if the rear approaching vehicle is attempting to change lanes to the left adjacent lane, even when the left turn signal is in the blinking state.

According to the above embodiment, in a case where the rear approaching vehicle and the host vehicle are attempting to change lanes to the lane in the same side, the execution of the lane departure prevention operation for preventing the host vehicle from departing to that lane in the same side is not cancelled. Therefore, a possibility of preventing the host vehicle from coming too close to the rear approaching vehicle, in that lane in the same side, is enhanced.

In one of the embodiments according to the present disclosure,
the control unit is configured to:
permit cancelling the rightward departure prevention operation, if the right turn signal of the host vehicle is in the blinking state, only when there is the right adjacent lane to which the host vehicle can change lanes rightward from the host lane; and
permit cancelling the leftward departure prevention operation, if the left turn signal of the host vehicle is in the blinking state, only when there is the left adjacent lane to which the host vehicle can change lanes leftward from the host lane.

According to the above embodiment, it is possible to prevent the host vehicle from departing from the host lane to a side where there is no lane.

Notably, in the above description, in order to facilitate understanding of the present disclosure, the constituent elements corresponding to those of an embodiment which will be described later are accompanied by parenthesized symbols and/or names which are used in the embodiment; however, the constituent elements of the disclosure are not limited to those in the embodiment defined by the symbols and/or names. The present disclosure covers a lane departure prevention method, and a non-transitory storage medium storing a program thereof.

### BRIEF DESCRIPTION OF THE DRAWINGS

FIG. 1 is a schematic diagram of a lane departure prevention apparatus according to an embodiment of the present disclosure.
FIG. 2A is a drawing for describing operations of the lane departure prevention apparatus shown in FIG. 1.
FIG. 2B is a drawing for describing operations of the lane departure prevention apparatus shown in FIG. 1.
FIG. 2C is a drawing for describing operations of the lane departure prevention apparatus shown in FIG. 1.
FIG. 3 shows a routine executed by a CPU of a driving support ECU shown in FIG. 1.
FIG. 4 shows a routine executed by the CPU of the driving support ECU shown in FIG. 1.
FIG. 5A is a drawing for describing operations of the lane departure prevention apparatus shown in FIG. 1.
FIG. 5B is a drawing for describing operations of the lane departure prevention apparatus shown in FIG. 1.
FIG. 5C is a drawing for describing operations of the lane departure prevention apparatus shown in FIG. 1.
FIG. 5D is a drawing for describing operations of the lane departure prevention apparatus shown in FIG. 1.
FIG. 6A is a drawing for describing operations of the lane departure prevention apparatus shown in FIG. 1.
FIG. 6B is a drawing for describing operations of the lane departure prevention apparatus shown in FIG. 1.
FIG. 6C is a drawing for describing operations of the lane departure prevention apparatus shown in FIG. 1.
FIG. 7 shows a routine executed by a CPU of a modification of the driving support ECU shown in FIG. 1.
FIG. 8 shows a routine executed by a CPU of a modification of the driving support ECU shown in FIG. 1.
FIG. 9 shows a routine executed by a CPU of a modification of the driving support ECU shown in FIG. 1.

### DETAILED DESCRIPTION

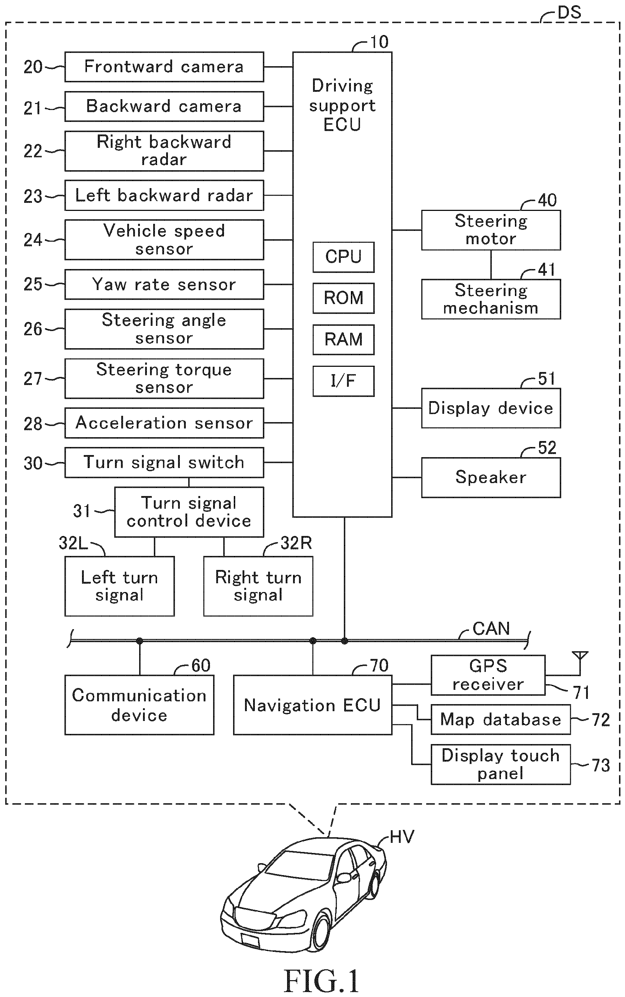

A lane departure prevention (suppression) apparatus DS (hereinafter, referred to as an "apparatus DS") according to an embodiment of the present disclosure comprises components/elements illustrated in FIG. 1. The apparatus DS is applied to and/or is mounted on a host vehicle HV. The host vehicle HV may be one of a vehicle having an internal combustion engine as a drive source, a vehicle having an electric motor as a drive source (namely, an electric vehicle), and a hybrid vehicle.

In the present specification, an "ECU" means an electronic control device/unit (i.e., a control unit), that includes a microcomputer. The microcomputer includes a CPU (processor), a ROM, a RAM, a data writable involatile memory, and an interface. The ECU may sometimes be referred to as a "controller" or a "computer". A plurality of ECUs shown in FIG. 1 are connected to each other through Controller Area Network (CAN) in such a manner that they can exchange information with each other. Some or all of these ECUs may be integrated into a single ECU.

A driving support/assistance ECU (a lane departure prevention ECU) 10 performs/executes a lane departure prevention control described later, using the elements/components shown in FIG. 1. Functions of the driving support ECU 10 may be realized/implemented by a plurality of ECUs. The driving support ECU 10 is connected with elements (cameras, sensors, switches, and devices) described below, and exchange information or signals with each other.

A frontward camera 20 takes a picture of a scene in front of the host vehicle HV to generate/produce a frontward image data (frontward camera information, frontward camera image) every time a predetermined time elapses. The driving support ECU 10 recognizes demarcation lines of a lane on a road on which the host vehicle HV is traveling, based on the frontward image data. The demarcation line includes a lane demarcation line (that is a lane marker, e.g. a white line) and an object that defines a lane (e.g., a guardrail, a wall, or a curb). Furthermore, the driving support ECU 10 can obtain, based on the frontward image data, a position of the host vehicle HV with respect to the demarcation line in a lane width direction (e.g., a distance between the demarcation line and the host vehicle HV), a speed of the host vehicle HV in the lane width direction, and an angle formed between the demarcation line and a traveling direction of the host vehicle HV.

A backward camera 21 takes a picture of a scene in rear of the host vehicle HV to generate/produce a backward/rear image data (backward camera information, backward camera image) every time a predetermined time elapses. As mentioned, a vehicle that is present in the lane (i.e., the host lane) in which the host vehicle is traveling and that is approaching the host vehicle HV from behind is referred to as a "rear approaching vehicle". The driving support ECU 10 can obtain, based on the backward image data, a distance between the host vehicle HV and the rear approaching vehicle and a position of the rear approaching vehicle in the host lane in the lane width direction. Therefore, the driving support ECU 10 can acquire the "speed and acceleration" of the rear approaching vehicle in the lane width direction, based on the temporal transition of the position of the rear approaching vehicle in the lane width direction.

A right backward radar 22 obtains object information on an object located to the right rear and rear of the host vehicle HV using electric wave in the millimeter band. The object information includes a distance between the host vehicle HV and the object, a relative speed of the object with respect to the host vehicle HV, and an azimuth (direction) of the object. A left backward radar 23 obtains object information on an object located to the left rear and rear of the host vehicle HV using electric wave in the millimeter band. The driving support ECU 10 can obtain, based on the information (hereinafter, referred to as "backward radar information") from the right backward radar 22 and the left backward radar 23, a distance between the host vehicle HV to and a vehicle that is present in the host lane and behind the host vehicle HV, a relative speed of that vehicle with respect to the host vehicle, an azimuth (direction) of that vehicle, or the like. It should be noted that the rear approaching vehicle is another vehicle that is present in the host lane and behind the host vehicle HV, and the relative speed in approaching the host vehicle direction is equal to or greater than a threshold speed.

The driving support ECU 10 fuses information obtained based on the backward image data and the backward radar information to generate fusion object information.

A vehicle speed sensor 24 outputs a signal indicative of a speed Vh of the host vehicle HV (i.e., host vehicle speed Vh).

A yaw rate sensor 25 outputs a signal indication of a yaw rate Yr of the host vehicle.

A steering angle sensor 26 outputs a signal indicative of a steering angle Sa of the host vehicle HV.

A steering torque sensor 27 outputs a signal indicative of a steering torque Tq of the host vehicle HV.

An acceleration sensor 28 outputs a signal indicative of an acceleration of the host vehicle in a front-rear direction, and an acceleration of the host vehicle in a lateral direction.

A turn signal switch 30 transmits a signal to set a right turn signal 32R to an on state (i.e., a blinking state) when a direction indicator lever operated by the driver of the host vehicle HV is at a first position, to a turn signal control device 31. The turn signal switch 30 transmits a signal to set a left turn signal 32L to an on state (i.e., a blinking state) when the direction indicator lever is at a second position, to the turn signal control device 31. The turn signal control device 31 blinks either one of the right turn signal 32R and the left turn signal 32L, based on the signal from the turn signal switch 30.

A steering motor 40 drives a steering mechanism 41 to vary a steering angle of the host vehicle HV, in accordance with an instruction sent from the driving support ECU 10. Therefore, the driving support ECU 10 can apply a force that causes the host vehicle HV to move toward a center (center line) of the host lane to the host vehicle HV by varying the steering angle, when the host vehicle HV is likely to depart from the host lane. It should be noted that the driving support ECU 10 may apply the force that causes the host vehicle HV to move toward the center (center line) of the host lane to the host vehicle HV by differentiating between a drive force to a left drive wheel and a drive force to a right drive wheel or by differentiating between a brake force to a left wheel and a brake force to a right wheel.

A display device 51 displays an alert sign indicating that the host vehicle HV is likely to depart from the host lane or an alert sign indicating that the host vehicle has been departing from the host lane to the driver of the host vehicle HV, in accordance with an instruction sent from the driving support ECU 10.

A speaker 52 generates an alert sound indicating that the host vehicle HV is likely to depart from the host lane or an alert sound indicating that the host vehicle has been departing from the host lane to the driver of the host vehicle HV, in accordance with an instruction sent from the driving support ECU 10.

A communication device 60 communicates (for example, performing roadside-to-vehicle communication and/or vehicle-to-vehicle communication) with external devices (for example, roadside units and the communication devices of other vehicles) of the host vehicle HV so as to acquire various types of information from the external devices.

A navigation ECU 70 is connected with a GPS receiver 71, a map database 72, a display touch panel 73 displaying touch buttons. The navigation ECU 70 obtains a present position of the host vehicle HV based on the GPS signals which the GPS receiver 71 has received. The navigation ECU 70 can obtain, based on the obtained present position of the host vehicle HV and map information stored in the map database 72, information (e.g., how many lanes in one direction) on lanes of a road on which the host vehicle HV is currently traveling and information on which of the lane among the lanes the host vehicle HV is currently traveling.

### (Outline of operation)

### <Lane departure prevention (suppression) control>

As shown in FIG. 2A, the driving support ECU 10 recognizes "a left demarcation line LLM and a right demarcation line RLM" that define the host lane HL, based on the frontward camera information. Thereafter, the driving support ECU 10 sets a left outward reference line LOT to a line obtained by shifting a center line LC of the left demarcation line LLM leftward (outward) by a distance D1L, and sets a left inward reference line LIN to a line obtained by shifting the center line LC rightward (inward) by a distance D2L. Similarly, the driving support ECU 10 sets a right outward reference line ROT to a line obtained by shifting a center line RC of the right demarcation line RLM rightward (outward) by a distance D1R, and sets a right inward reference line RIN to a line obtained by shifting the center line RC leftward (inward) by a distance D2R.

The driving support ECU 10 determines that a leftward departure prevention operation start condition is satisfied, when any one of a condition CL1 described later and a condition CL2 described later is satisfied. When the driving support ECU 10 determines that the leftward departure prevention operation start condition is satisfied, the ECU10 automatically varies the steering angle rightward so as to prevent the host vehicle HV from departing from the left demarcation line LLM to an outside of the host lane HL (i.e., so as to let the host vehicle HV return to the center of the host lane HL in the lane width direction). This automatic steering is an operation to apply a "force in a direction for avoiding the departure from the host lane" to the host vehicle, and is referred to as a "lane departure prevention operation". In addition, the driving support ECU 10 performs an "alert generation operation" to generate an alert to the driver of the host vehicle HV, when performing the lane departure prevention operation. Each of the lane departure prevention operation and the alert generation operation is referred to as a "departure suppression support operation".

### «Leftward departure prevention operation start condition»

(Condition CL1) The condition CL1 is satisfied when it is predicted that a left front edge of the host vehicle HV will reach the left outward reference line LOT after a constant time T. Note that the driving support ECU 10 predicts (estimates) a position of the host vehicle HV in the lane width direction after the constant time T, based on a distance DL that is a distance between the host vehicle HV and the center line LC of the left demarcation line LLM at the present time point, a leftward speed in the lane width direction of the host vehicle HV, and a leftward acceleration in the lane width direction of the host vehicle HV. The driving support ECU 10 determines whether or not the condition CL1 is satisfied, based on that predicted position of the host vehicle HV in the lane width direction after the constant time T.

(Condition CL2) The condition CL2 is satisfied when the left front edge of the host vehicle HV has reached the left inward reference line LIN.

The driving support ECU 10 determines that a rightward departure prevention operation start condition is satisfied, when any one of a condition CR1 described later and a condition CR2 described later is satisfied. When the driving support ECU 10 determines that the rightward departure prevention operation start condition is satisfied, the ECU10 automatically varies the steering angle leftward so as to prevent the host vehicle HV from departing from the right demarcation line RLM to an outside of the host lane HL (i.e., so as to let the host vehicle HV return to the center of the host lane HL in the lane width direction).

### <<Rightward departure prevention operation start condition>>

(Condition CR1) The condition CR1 is satisfied when it is predicted that a right front edge of the host vehicle HV will reach the right outward reference line ROT after the constant time T. Note that the driving support ECU 10 determines whether the condition CR1 is satisfied, similarly to when it determines whether the condition CL1 is satisfied. Namely, the driving support ECU 10 predicts (estimates) the position of the host vehicle HV in the lane width direction after the constant time T, based on a distance DR that is a distance between the host vehicle HV and the center line RC of the right demarcation line RLM at the present time point, a rightward speed in the lane width direction of the host vehicle HV, and a rightward acceleration in the lane width direction of the host vehicle HV. The driving support ECU 10 determines whether or not the condition CR1 is satisfied, based on that predicted position of the host vehicle HV in the lane width direction after the constant time T.

(Condition CR2) The condition CR2 is satisfied when the right front edge of the host vehicle HV has reached the right inward reference line RIN.

### <Control with respect to rear approaching vehicle>

As shown in FIG. 2B, when the host vehicle blinks the turn signal, it can be determined/judged that the driver of the host vehicle HV has an intention to change lanes. Thus, when the host vehicle blinks the turn signal, the departure suppression support operation including the lane departure prevention operation that is the leftward departure prevention operation and/or the rightward departure prevention operation is temporarily canceled (stopped, or suppressed). At this time point, if "the rear approaching vehicle RV that is approaching the host vehicle HV from behind in the host lane HL" is changing the lanes from the host lane HL to the adjacent lane (RL or LL) so as to overtake the host vehicle HV, there is a high probability that the host vehicle HV and the rear approaching vehicle RV come too close to each other in the adjacent lane.

In view of the above, when the rear approaching vehicle RV is present, the present apparatus DS prohibits cancelling the departure suppression support operation even when the host vehicle blinks the turn signal. That is, in this case, one of the leftward departure prevention operation and the rightward departure prevention operation is performed as necessary, even when the host vehicle blinks the turn signal.

### (Specific operation)

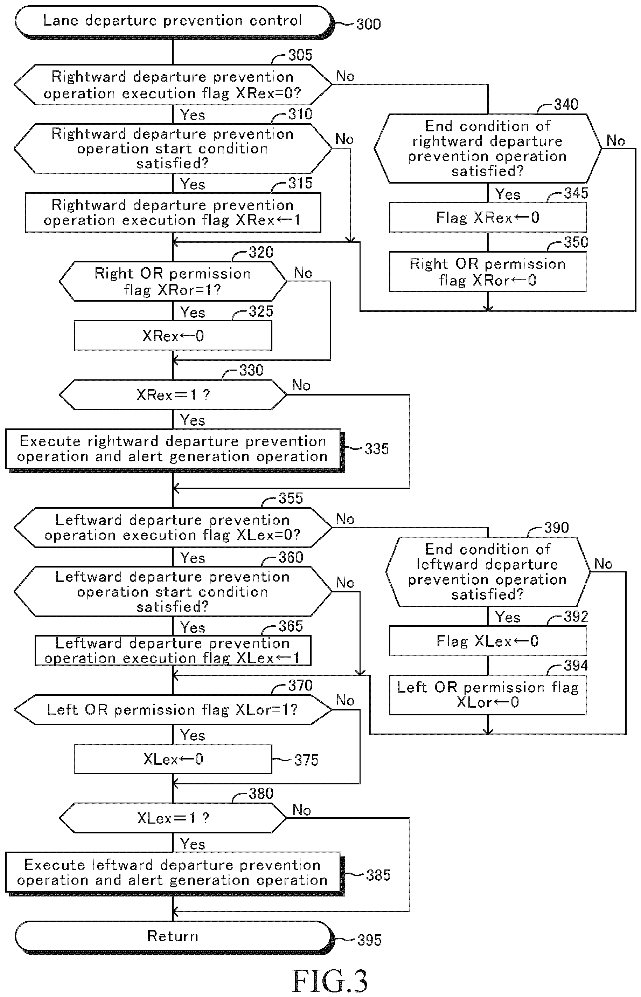

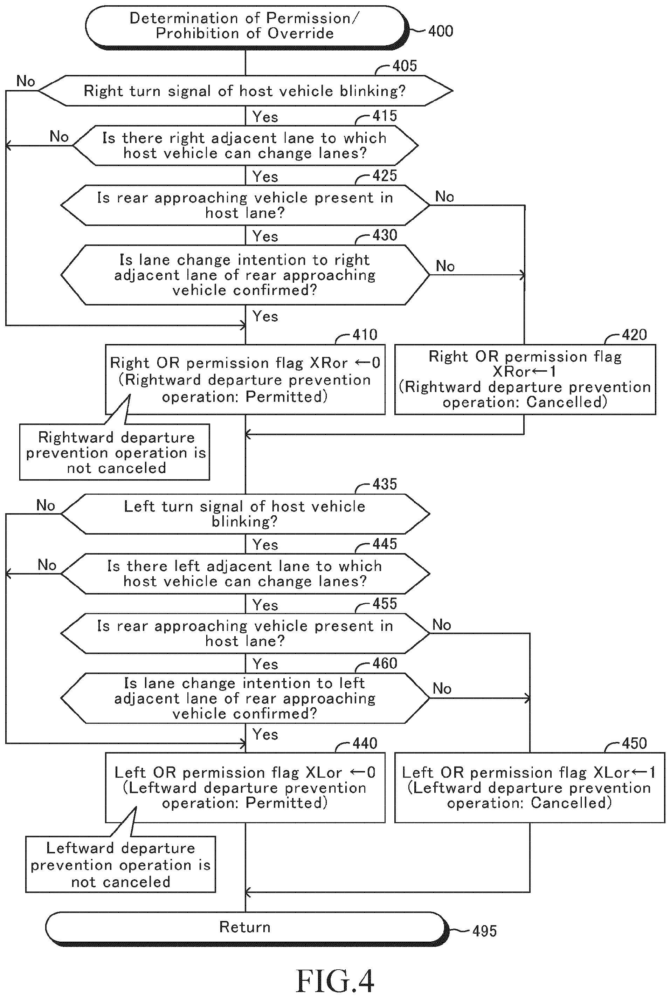

The CPU of the driving support ECU 10 (hereinafter, simply referred to as a "CPU") executes routines shown by flowcharts in FIGs. 3 and 4, every time a predetermined time (calculation cycle) dt elapses. It should be noted that, hereinafter, "step" is expressed as "S". Each of values of flags described below is set to "0", through an initialization routine executed by the CPU when the host vehicle is activated.

### <Lane departure prevention (suppression) control>

When an appropriate time point comes, the CPU starts processing from S300 in FIG. 3, and proceeds to S305. At S305, the CPU determines whether or not a value of a rightward departure prevention operation execution flag XRex is "0". The rightward departure prevention operation execution flag XRex indicates that the rightward departure prevention operation is being executed when its value is "1", and indicates that the rightward departure prevention operation is not being executed when its value is "0".

When the value of the rightward departure prevention operation execution flag XRex is "0", the CPU proceeds to S310 from S305. At S310, the CPU determines whether or not the rightward departure prevention operation start condition (i.e., at least one of the condition CR1 and the condition CR2) is satisfied. When the rightward departure prevention operation start condition is satisfied, the CPU proceeds to S315 from S310. At S315, the CPU sets the value of the rightward departure prevention operation execution flag XRex to "1", and proceeds to S320. When the rightward departure prevention operation start condition is not satisfied, the CPU directly proceeds to S320 from S310.

At S320, the CPU determines whether or not a value of a right OR (override) permission flag XRor is "1". When the value of the right OR permission flag XRor is "1", the host vehicle HV is permitted to depart from the right demarcation line RLM to the right by cancelling (i.e., stopping or prohibiting) the rightward departure prevention operation. Namely, when the value of the right OR permission flag XRor is set at "1", a driving operation (i.e., a rightward override) for changing lanes to the right adjacent lane by the driver of the host vehicle HV is permitted. Whereas, when the value of the right OR permission flag XRor is "0", the rightward override is prohibited, and the rightward departure prevention operation is permitted.

When the value of the right OR permission flag XRor is "1", the CPU proceeds to S325 from S320. At S325, the CPU sets the value of the rightward departure prevention operation execution flag XRex to "0", and proceeds to S330. Whereas, when the value of the right OR permission flag XRor is "0", the CPU directly proceeds to S330 from S320. Therefore, the processes of S320 and S325 permit the rightward override.

At S330, the CPU determines whether or not the value of the rightward departure prevention operation execution flag XRex is "1". When the value of the rightward departure prevention operation execution flag XRex is "1", the CPU proceeds to S335 from S330. At S335, the CPU automatically steers the host vehicle HV leftward so that the host vehicle HV does not depart from the host lane HL outward (rightward) through the right demarcation line RLM. Namely, the CPU performs the rightward departure prevention operation as the lane departure prevention operation.

In addition, at S335, the CPU performs the alert generation operation to generate the alert to the driver of the host vehicle HV. Specifically, the CPU causes the display device 51 to display the alert sign, and causes the speaker 52 to generate the alert sound. In this case, the alert sign displayed at S335 may be a sign simply indicating that there is a probability that the host vehicle HV departs from the host lane, or a sign indicating that there is a probability that the host vehicle HV departs from the host lane rightward. Similarly, the alert sound generated at S335 may be a simple sound (a warning sound) indicating that there is a probability that the host vehicle HV departs from the host lane, or a sound (a message sound) indicating that there is a probability that the host vehicle HV departs from the host lane rightward. Thereafter, the CPU proceeds to S355.

Whereas, when the value of the rightward departure prevention operation execution flag XRex is not "1", the CPU directly proceeds to S355 from S330.

When the CPU proceeds to S305, the CPU proceeds to S340 from S305, if the value of the rightward departure prevention operation execution flag XRex is "1". At S340, the CPU determines whether or not an end condition of the rightward departure prevention operation becomes satisfied. The end condition of the rightward departure prevention operation is satisfied, for example, when the rightward departure prevention operation continues being performed for a constant time or longer, or when a whole of the host vehicle HV is positioned in the center side of the host lane with respect to the right inward reference line RIN.

When the end condition of the rightward departure prevention operation is satisfied, the CPU proceeds to S345 from S340. At S345, the CPU sets the value of the rightward departure prevention operation execution flag XRex to "0". Then, at S350, the CPU sets the value of the right OR permission flag XRor to "0", and proceeds to S320. Whereas, when the end condition of the rightward departure prevention operation is not satisfied, the CPU directly proceeds to S320 from S340.

When the CPU proceeds S355, the CPU determines whether or not a value of a leftward departure prevention operation execution flag XLex is "0". The leftward departure prevention operation execution flag XLex indicates that the leftward departure prevention operation is being executed when its value is "1", and indicates that the leftward departure prevention operation is not being executed when its value is "0".

When the value of the leftward departure prevention operation execution flag XLex is "0", the CPU proceeds to S360 from S355. At S360, the CPU determines whether or not the leftward departure prevention operation start condition (i.e., at least one of the condition CL1 and the condition CL2) is satisfied. When the leftward departure prevention operation start condition is satisfied, the CPU proceeds to S365 from S360. At S365, the CPU sets the value of the leftward departure prevention operation execution flag XLex to "1", and proceeds to S370. Whereas, when the leftward departure prevention operation start condition is not satisfied, the CPU directly proceeds to S370 from S360.

At S370, the CPU determines whether or not a value of a left OR (override) permission flag XLor is "1". When the value of the left OR permission flag XLor is "1", the host vehicle HV is permitted to depart from the left demarcation line LLM to the left by cancelling (i.e., stopping or prohibiting) the leftward departure prevention operation. Namely, when the value of the left OR permission flag XLor is set at "1", a driving operation (i.e., a leftward override) for changing lanes to the left adjacent lane by the driver of the host vehicle HV is permitted. Whereas, when the value of the left OR permission flag XLor is "0", the leftward override is prohibited, and the leftward departure prevention operation is permitted.

When the value of the left OR permission flag XLor is "1", the CPU proceeds to S375 from S370. At S375, the CPU sets the value of the leftward departure prevention operation execution flag XLex to "0", and proceeds to S380. Whereas, when the value of the left OR permission flag XLor is "0", the CPU directly proceeds to S380 from S370. Therefore, the processes of S370 and S375 permit the leftward override.

At S380, the CPU determines whether or not the value of the leftward departure prevention operation execution flag XLex is "1". When the value of the leftward departure prevention operation execution flag XLex is "1", the CPU proceeds to S385 from S380. At S385, the CPU automatically steers the host vehicle HV rightward so that the host vehicle does not depart from the host lane HL outward (leftward) through the left demarcation line LLM. Namely, the CPU performs the leftward departure prevention operation as the lane departure prevention operation.

In addition, at S385, the CPU performs the alert generation operation to generate the alert to the driver of the host vehicle HV. Specifically, the CPU causes the display device 51 to display the alert sign, and causes the speaker 52 to generate the alert sound. In this case, the alert sign displayed at S385 may be a sign simply indicating that there is a probability that the host vehicle HV departs from the host lane, or a sign indicating that there is a probability that the host vehicle HV departs from the host lane leftward. Similarly, the alert sound generated at S385 may be a simple sound (a warning sound) indicating that there is a probability that the host vehicle HV departs from the host lane, or a sound (a message sound) indicating that there is a probability that the host vehicle HV departs from the host lane leftward. Thereafter, the CPU proceeds to S395 to terminate the present routine tentatively.

Whereas, when the value of the leftward departure prevention operation execution flag XLex is not "1", the CPU directly proceeds to S395 from S380.

When the CPU proceeds to S355, the CPU proceeds to S390 from S355, if the value of the leftward departure prevention operation execution flag XLex is "1". At S390, the CPU determines whether or not an end condition of the leftward departure prevention operation becomes satisfied. The end condition of the leftward departure prevention operation is satisfied, for example, when the leftward departure prevention operation continues being performed for a constant time or longer, or when a whole of the host vehicle HV is positioned in the center side of the host lane with respect to the left inward reference line LIN.

When the end condition of the leftward departure prevention operation is satisfied, the CPU proceeds to S392 from S390. At S392, the CPU sets the value of the leftward departure prevention operation execution flag XLex to "0". Then, at S394, the CPU sets the value of the left OR permission flag XLor to "0", and proceeds to S370. Whereas, when the end condition of the leftward departure prevention operation is not satisfied, the CPU directly proceeds to S370 from S390.

### <Determination of Permission/Prohibition of Override>

When an appropriate time point comes, the CPU starts processing from S400 in FIG. 4, and proceeds to S405. At S405, the CPU determines, based on the signal from the turn signal switch 30, whether or not the right turn signal 32R of the host vehicle HV is in the on-state (blinking state).

When the right turn signal 32R is not in the blinking state, the CPU proceeds to S410 from S405 to set the right OR permission flag XRor to "0". Thereafter, the CPU proceeds to S435.

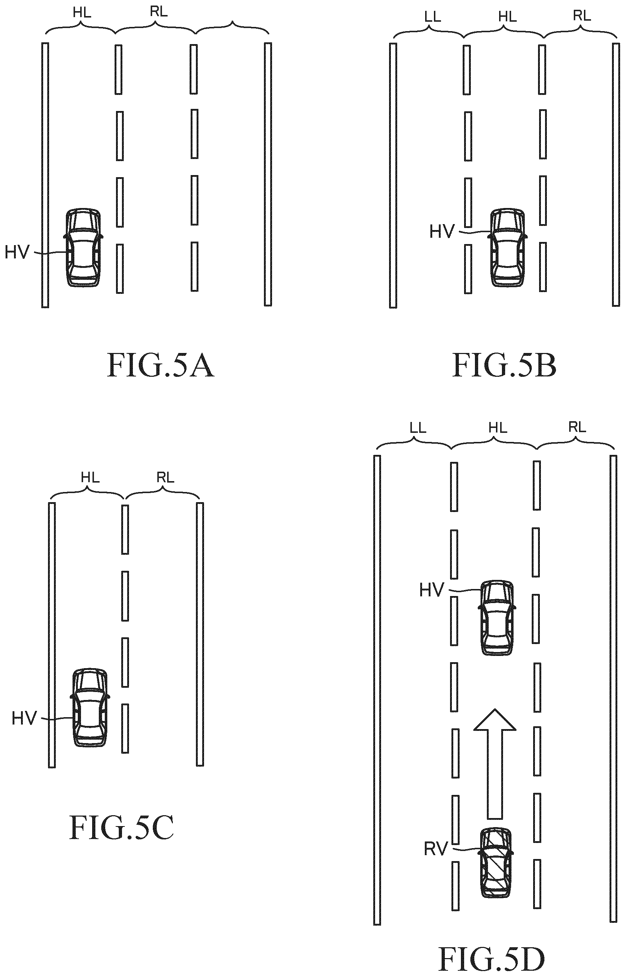

Whereas, when the right turn signal 32R is in the blinking state, the CPU proceeds to S415 from S405. At S415, the CPU determines whether or not there is a right adjacent lane (a lane in the right side of the host lane) to which the host vehicle HV can change lanes from the host lane, based on the frontward image data (or information obtained from the navigation ECU 70). For example, in examples shown in FIGs. 5A, 5B and 5C, there is the right adjacent lane to which the host vehicle HV can change lanes from the host lane. When there is not the right adjacent lane, the CPU proceeds to S410 from S415.

Whereas, when there is the right adjacent lane, the CPU proceeds to S425 from S415 to determine whether or not the rear approaching vehicle RV (the vehicle that is present in the host lane HL and is approaching the host vehicle HV from behind) is present, based on the backward image data (or information obtained through a vehicle to vehicle communication between the host vehicle and the rear approaching vehicle RV). When the rear approaching vehicle is not present, the CPU proceeds to S420 from S425 to set the value of the right OR permission flag XRor to "1 ". Thereafter, the CPU proceeds to S435.

As shown in FIG. 5D, when the rear approaching vehicle is present, the CPU proceeds to S430 from S425 to determine whether or not a lane change intention to the right adjacent lane of the rear approaching vehicle RV is confirmed. For example, when the CPU has confirmed any one of cases described below, the CPU determines that the lane change intention to the right adjacent lane of the rear approaching vehicle RV is confirmed.

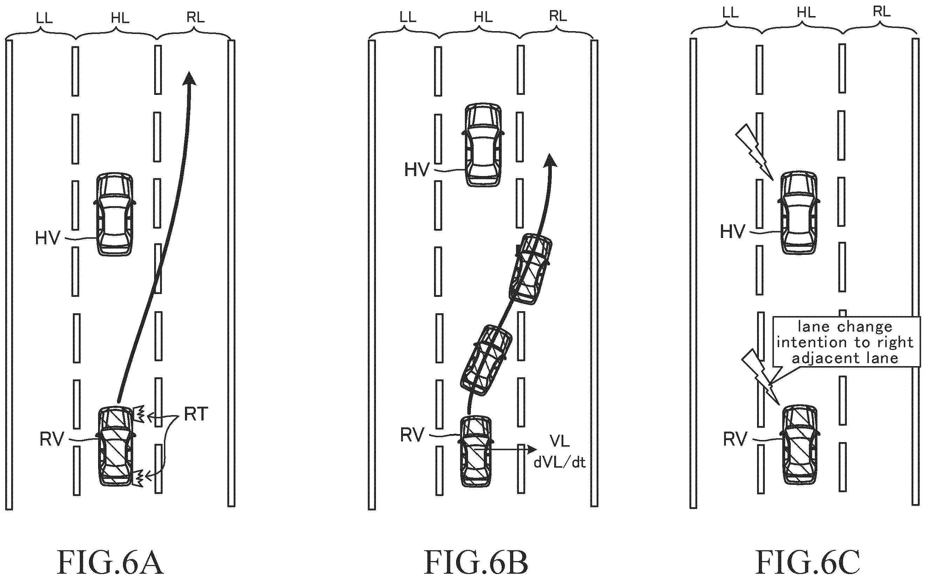

(Case R1) A case where the CPU has confirmed that a right turn signal RT of the rear approaching vehicle RV is in the blinking state, based on the backward image data (refer to FIG. 6A).

(Case R2) A case where the CPU has confirmed, based on the backward image data and/or the backward radar information, that "a rightward moving speed VR and/or a rightward moving acceleration dVR/dt" of the rear approaching vehicle RV in the lane width direction are greater than respective thresholds (refer to FIG. 6B).

(Case R3) A case where the CPU has obtained, through the vehicle to vehicle communication between the host vehicle and the rear approaching vehicle RV (refer to FIG. 6C), information indicating that the right turn signal RT of the rear approaching vehicle RV is in the blinking state and/or information indicating that a driver of the rear approaching vehicle RV has operated a steering wheel by a predetermined angle or more to the right side.

When the CPU does not determine that the lane change intention to the right adjacent lane of the rear approaching vehicle RV is confirmed, the CPU proceeds to S420 from S430 to set the value of the right OR permission flag XRor to "1". Thereafter, the CPU proceeds to S435.

Whereas, when the CPU determines that the lane change intention to the right adjacent lane of the rear approaching vehicle RV is confirmed, the CPU proceeds to S410 from S430 to set the value of the right OR permission flag XRor to "0". Thereafter, the CPU proceeds to S435.

At S435, the CPU determines, based on the signal from the turn signal switch 30, whether or not the left turn signal 32L of the host vehicle HV is in the on-state (blinking state).

When the left turn signal 32L is not in the blinking state, the CPU proceeds to S440 from S435 to set the left OR permission flag XLor to "0". Thereafter, the CPU proceeds to S495 to terminate the present routine tentatively.

Whereas, when the left turn signal 32L is in the blinking state, the CPU proceeds to S445 from S435. At S445, the CPU determines whether or not there is a left adjacent lane (a lane in the left side of the host lane) to which the host vehicle HV can change lanes from the host lane, based on the frontward image data (or information obtained from the navigation ECU 70). When there is not the left adjacent lane, the CPU proceeds to S440 from S445.

Whereas, when there is the left adjacent lane, the CPU proceeds to S455 from S445 to determine whether or not the rear approaching vehicle RV is present, based on the backward image data (or the information obtained through the vehicle to vehicle communication between the host vehicle and the rear approaching vehicle RV). When the rear approaching vehicle is not present, the CPU proceeds to S450 from S455 to set the value of the left OR permission flag XLor to "1". Thereafter, the CPU proceeds to S495.

As shown in FIG. 5D, when the rear approaching vehicle is present, the CPU proceeds to S460 from S455 to determine whether or not a lane change intention to the left adjacent lane of the rear approaching vehicle RV is confirmed. For example, when the CPU has confirmed any one of cases described below, the CPU determines that the lane change intention to the left adjacent lane of the rear approaching vehicle RV is confirmed.

(Case L1) A case where the CPU has confirmed that a left turn signal LT of the rear approaching vehicle RV is in the blinking state, based on the backward image data.

(Case L2) A case where the CPU has confirmed, based on the backward image data and/or the backward radar information, that "a leftward moving speed VR and/or a leftward moving acceleration dVR/dt" of the rear approaching vehicle RV in the lane width direction are greater than respective thresholds.

(Case L3) A case where the CPU has obtained, through the vehicle to vehicle communication between the host vehicle and the rear approaching vehicle RV, information indicating that the left turn signal LT of the rear approaching vehicle RV is in the blinking state and/or information indicating that the driver of the rear approaching vehicle RV has operated the steering wheel by the predetermined angle or more to the left side.

When the CPU does not determine that the lane change intention to the left adjacent lane of the rear approaching vehicle RV is confirmed, the CPU proceeds to S450 from S460 to set the value of the left OR permission flag XLor to "1". Thereafter, the CPU proceeds to S495.

Whereas, when the CPU determines that the lane change intention to the left adjacent lane of the rear approaching vehicle RV is confirmed, the CPU proceeds to S440 from S460 to set the value of the left OR permission flag XLor to "0". Thereafter, the CPU proceeds to S495.

As has been described, when the rear approaching vehicle, that is present in the host lane and that is coming closer to the host vehicle, is detected, the apparatus DS does not cancel executing the lane departure prevention operation even when the turn signal turns into the blinking state. In other words, in such a case, the apparatus permits executing the lane departure prevention operation. Accordingly, since the host vehicle is prevented from departing from the host lane in such a case, the host vehicle does not obstruct the travel of the rear approaching vehicle that is attempting to overtake the host vehicle after changing lanes.

### (Modified example)

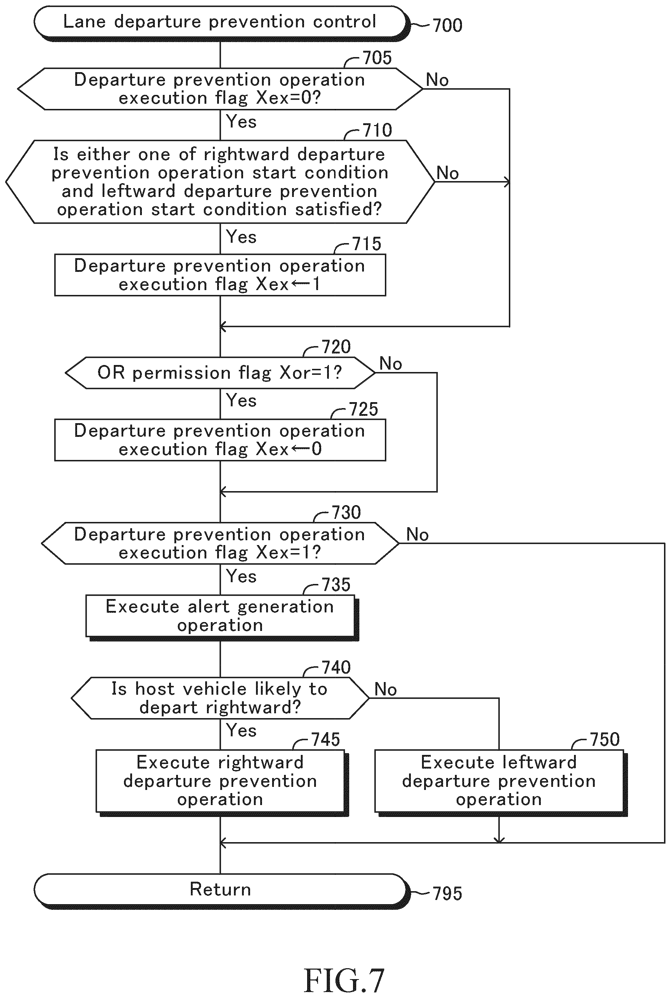

A modified example of the apparatus DS will next be described. This modified example of the apparatus DS is different from the above-described apparatus DS only in that the CPU of the driving support ECU 10 executes routines shown by flowcharts in FIGs. 7 to 9, in place of FIGs. 3 and 4, every time a predetermined time (calculation cycle) dt elapses. Specifically, the modified example of the apparatus DS is different from the above-described apparatus DS in that it adopts "a departure prevention operation execution flag Xex and an OR permission flag Xor" both commonly used between the leftward departure prevention operation and the rightward departure prevention operation, and does not confirm the lane change intention of the rear approaching vehicle.

### <Lane departure prevention (suppression) control>

When an appropriate time point comes, the CPU starts processing from S700 in FIG. 7, and proceeds to S705. At S705, the CPU determines whether or not a value of a departure prevention operation execution flag Xex is "0". The departure prevention operation execution flag Xex indicates that any one of the rightward departure prevention operation and the leftward departure prevention operation is being executed when its value is "1", and indicates that neither the rightward departure prevention operation nor the leftward departure prevention operation is being executed when its value is "0".

When the value of the departure prevention operation execution flag Xex is "0", the CPU proceeds to S710 from S705 to determine whether or not either one of the rightward departure prevention operation start condition and the leftward departure prevention operation start condition is satisfied.

When either one of the rightward departure prevention operation start condition and the leftward departure prevention operation start condition is satisfied, the CPU proceeds to S715 from S710 to set a value of the departure prevention operation execution flag Xex to "1". Thereafter, the CPU proceeds to S720.

Whereas, when the CPU makes a "No" determination at S705, the CPU directly proceeds to S720 from S705. Furthermore, when the CPU makes a "No" determination at S710, the CPU directly proceeds to S720 from S710.

At S720, the CPU determines whether or not the value of the OR (override) permission flag Xor is "1". When the value of the OR permission flag Xor is "1", both of the rightward departure prevention operation and the leftward departure prevention operation are canceled (stopped, prohibited), so that the host vehicle HV is permitted to depart from the host lane. Namely, when the value of the OR permission flag Xor is set at "1", a driving operation (i.e., an override) for changing lanes to either the right adjacent lane or the left adjacent lane by the driver of the host vehicle HV is permitted. Whereas, when the value of the OR permission flag Xor is "0", the override is prohibited, and the departure prevention operation (the rightward departure prevention operation and the leftward departure prevention operation) is permitted.

When the value of the OR permission flag Xor is "1", the CPU proceeds to S725 from S720. At S725, the CPU sets the value of the departure prevention operation execution flag Xex to "0", and proceeds to S730. Whereas, when the value of the OR permission flag Xor is "0", the CPU directly proceeds to S730 from S720. Therefore, the processes of S720 and S725 cancel (prohibit) the departure prevention operation, and permit the override.

At S730, the CPU determines whether or not the value of the departure prevention operation execution flag Xex is "1". When the value of the departure prevention operation execution flag Xex is "1", the CPU proceeds to S735 from S730. At S735, the CPU performs the alert generation operation to generate the alert to the driver of the host vehicle HV. Specifically, the CPU causes the display device 51 to display the above-described alert sign, and causes the speaker 52 to generate the above-described alert sound. The alert sign displayed at S735 may be a sign simply indicating that there is a probability that the host vehicle HV departs from the host lane, or a sign indicating that there is a probability that the host vehicle HV departs from the host lane with a sign indicating a side to which the host vehicle departs. Similarly, the alert sound generated at S735 may be a simple sound (a warning sound) indicating that there is a probability that the host vehicle HV departs from the host lane, or message sound indicating that there is a probability that the host vehicle HV departs from the host lane and which side to which the host vehicle departs. Thereafter, the CPU proceeds to S740.

At S740, the CPU determines whether or not the host vehicle is about to depart from the host lane rightward. When the host vehicle is about to depart from the host lane rightward, the CPU proceeds to S745 from S740 to automatically steer the host vehicle HV leftward so that the host vehicle HV does not depart from the host lane HL outward (rightward) through the right demarcation line RLM.

Whereas, When the host vehicle is about to depart from the host lane leftward, the CPU proceeds to S750 from S740 to automatically steer the host vehicle HV rightward so that the host vehicle HV does not depart from the host lane HL outward (leftward) through the left demarcation line LLM.

### <Termination of the lane departure prevention (suppression) operation>

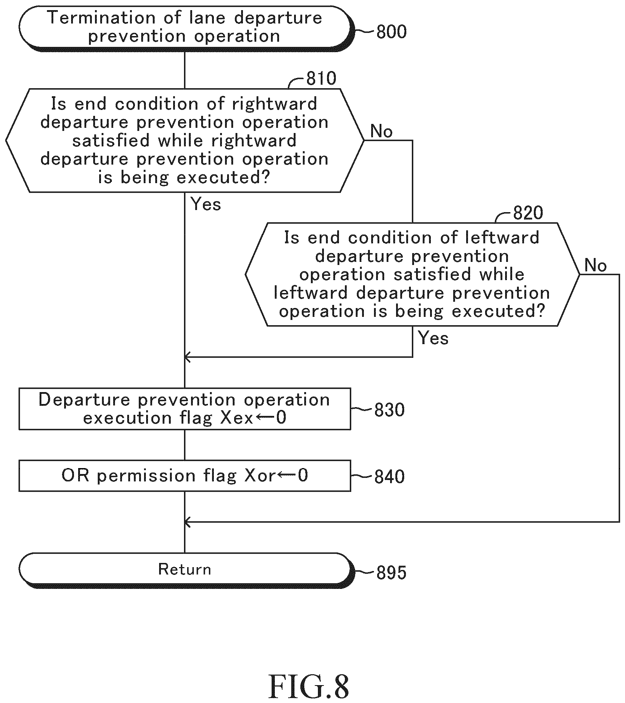

When an appropriate time point comes, the CPU starts processing from S800 in FIG. 8, and proceeds to S810. At S810, the CPU determines whether or not the above-described end condition of the rightward departure prevention operation becomes satisfied while the rightward departure prevention operation is being executed. When the end condition of the rightward departure prevention operation becomes satisfied while the rightward departure prevention operation is being executed, the CPU proceeds to S830 from S810.

Whereas, when the end condition of the rightward departure prevention operation does not become satisfied while the rightward departure prevention operation is being executed, the CPU proceeds to S820 from S810. At S820, the CPU determines whether or not the above-described end condition of the leftward departure prevention operation becomes satisfied while the leftward departure prevention operation is being executed. When the end condition of the leftward departure prevention operation does not become satisfied while the leftward departure prevention operation is being executed, the CPU proceeds to S895 from S820 to terminate the present routine tentatively. Whereas, when the end condition of the leftward departure prevention operation becomes satisfied while the leftward departure prevention operation is being executed, the CPU proceeds to S830 from S820.

At S830, the CPU sets the value of the departure prevention operation execution flag Xex to "0". Thereafter, the CPU proceeds to S840 to set the value of the OR permission flag Xor to "0". Subsequently, the CPU proceeds to S895 to terminate the present routine tentatively.

### <Determination of Permission/Prohibition of Override>

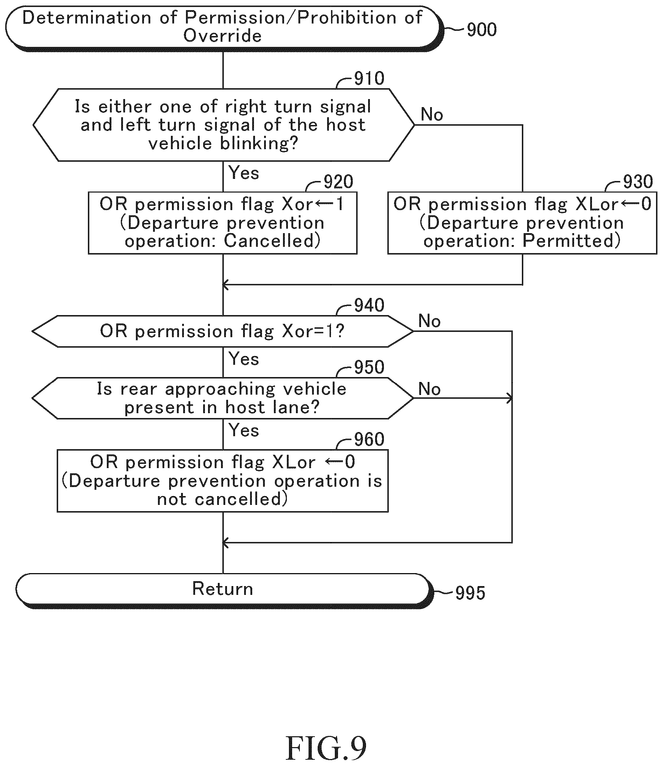

When an appropriate time point comes, the CPU starts processing from S900 in FIG. 9, and proceeds to S910. At S910, the CPU determines whether or not either one of the right turn signal 32R and the left turn signal 32L of the host vehicle HV is in the blinking state.

When either one of the right turn signal 32R and the left turn signal 32L of the host vehicle HV is in the blinking state, the CPU proceeds to S920 from S910 to set the value of the OR permission flag Xor to "1". Thereafter, the CPU proceeds to S940.

Whereas, when none of the right turn signal 32R and the left turn signal 32L of the host vehicle HV is in the blinking state, the CPU proceeds to S930 from S910 to set the value of the OR permission flag Xor to "0". Thereafter, the CPU proceeds to S940.

At S940, the CPU determines whether or not the value of the OR permission flag Xor is "1". When the value of the OR permission flag Xor is "1", the CPU proceeds to S950 from S940 to determine whether or not the rear approaching vehicle is present in the host lane based on the backward image data.

When the rear approaching vehicle is present, the CPU proceeds to S960 from S950 to set the value of the OR permission flag Xor to "0". This does not cause executing the departure prevention operation to be cancelled, and permits executing the departure prevention operation. Thereafter, the CPU proceeds to S995 to terminate the present routine tentatively.

Whereas, when the value of the OR permission flag Xor is not "1", the CPU proceeds to S995 from S940 to terminate the present routine tentatively. Furthermore, when the rear approaching vehicle is not present, the CPU proceeds to S995 from S950 to terminate the present routine tentatively.

The operations of the modified embodiment have been described as above. In this manner, the apparatus DS according to the modified embodiment prohibits/cancels both of the rightward departure prevention operation and the leftward departure prevention operation, when either one of the right turn signal 32R and the left turn signal 32L of the host vehicle HV is in the blinking state. While it is occurring (under the above situation), the apparatus DS according to the modified embodiment permits both of the rightward departure prevention operation and the leftward departure prevention operation, when the rear approaching vehicle is detected.

It should be noted that the present disclosure is not limited to the above embodiment and the modified embodiment, and may adopt various modifications within the scope of the present disclosure. For example, even when the CPU does not determine that the lane change intention to the right adjacent lane of the rear approaching vehicle RV is confirmed at S430 shown in FIG. 4, the CPU may proceed to S410 from S430 to set the value of the right OR permission flag XRor to "0". Namely, when the right turn signal 32R of the host vehicle HV is in the blinking state and the rear approaching vehicle is present, the CPU may prohibit the rightward override by permitting executing the rightward departure prevention operation without cancelling executing the rightward departure prevention operation, regardless of whether or not the lane change intention to the right adjacent lane of the rear approaching vehicle RV is confirmed.

Similarly, even when the CPU does not determine that the lane change intention to the left adjacent lane of the rear approaching vehicle RV is confirmed at S460 shown in FIG. 4, the CPU may proceed to S440 from S460 to set the value of the left OR permission flag XLor to "0". Namely, when the left turn signal 32L of the host vehicle HV is in the blinking state and the rear approaching vehicle is present, the CPU may prohibit the leftward override by permitting executing the leftward departure prevention operation without cancelling executing the leftward departure prevention operation, regardless of whether or not the lane change intention to the left adjacent lane of the rear approaching vehicle RV is confirmed.

In addition, similarly to the modified embodiment, the CPU may permit both of the leftward override and the rightward override by prohibiting (canceling) both of the leftward departure prevention operation and the rightward departure prevention operation, when either one of the right turn signal 32R and the left turn signal 32L of the host vehicle HV is in the blinking state. In this case, if the rear approaching vehicle is present, the CPU may prohibit an override to an overtaking lane with respect to the host lane HL by permitting only the lane departure prevention operation toward the overtaking lane without cancelling the lane departure prevention operation toward the overtaking lane, regardless of whether or not the lane change intention to the overtaking lane of the rear approaching vehicle RV is confirmed. The overtaking lane is a lane that is adjacent to the host lane HL and that is for higher speed vehicle. It should be noted that, for example, in a region with regulations that require vehicles to drive on the left side of the road, such as in Japan, the overtaking lane of the host lane HL means a right adjacent lane to the host lane HL (the right-hand lane). In a region with regulations that require vehicles to drive on the right side of the road, such as in U.S.A., the overtaking lane of the host lane HL means a left adjacent lane to the host lane HL (the left-hand lane).

Furthermore, if the CPU is configured to permit the rightward override and the leftward override by prohibiting (cancelling) both of the leftward departure prevention operation and the rightward departure prevention operation, when either one of the right turn signal 32R and the left turn signal 32L of the host vehicle HV is in the blinking state, similarly to the modified embodiment,
(1) the CPU may prohibit at least the rightward override by permitting the rightward departure prevention operation, when the rear approaching vehicle is detected and the lane change intention to the right adjacent lane of the rear approaching vehicle is confirmed, and
(2) the CPU may prohibit at least the leftward override by permitting the leftward departure prevention operation, when the rear approaching vehicle is detected and the lane change intention to the left adjacent lane of the rear approaching vehicle is confirmed.

For example, this invention can be applied to a host vehicle that is an autonomous driving vehicle in a state where its driving mode has been switched from automatic driving to manual driving.

## Claims

1. A lane departure prevention apparatus comprising a control unit (10) configured to perform, as a departure suppression support operation, at least one of an alert generation operation to generate an alert to a driver of a host vehicle (HV) and a lane departure prevention operation to apply a force in a direction for avoiding a departure of said host vehicle from a host lane to said host vehicle, when there is a probability that said host vehicle departs from said host lane (S335, S385, S735, S745, S750); and cancel performing said departure suppression support operation when a turn signal (32L, 32R) of said host vehicle (HV) is in a blinking state (S320-S330, S405, S420, S370-S380, S435, S450, S920, S720, S725),
wherein,
said control unit is configured to permit performing said departure suppression support operation without cancelling performing said departure suppression support operation (S410, S440, S960) when a rear approaching vehicle (RV) that is positioned in said host lane and is approaching said host vehicle from behind is present (S425, S455, S950), even when said turn signal (32L, 32R) of said host vehicle (HV) is in said blinking state.

2. The lane departure prevention apparatus according to claim 1,
wherein,
said control unit (10) is configured to:
perform said lane departure prevention operation as said departure suppression support operation;
determine whether or not said rear approaching vehicle (RV) is attempting to change lanes to a right adjacent lane that is adjacent to said host lane rightward (S430); and
permit performing at least said lane departure prevention operation for preventing said host vehicle (HV) from departing to said right adjacent lane without cancelling said lane departure prevention operation (S410) if it is determined that said rear approaching vehicle (RV) is attempting to change lanes to said right adjacent lane, even when said turn signal (32L, 32R) of said host vehicle is in said blinking state.

3. The lane departure prevention apparatus according to claim 1 or 2,
wherein,
said control unit (10) is configured to:
perform said lane departure prevention operation as said departure suppression support operation;
determine whether or not said rear approaching vehicle (RV) is attempting to change lanes to a left adjacent lane that is adjacent to said host lane leftward (S460); and
permit performing at least said lane departure prevention operation for preventing said host vehicle (HV) from departing to said left adjacent lane without cancelling said lane departure prevention operation (S440) if it is determined that said rear approaching vehicle (RV) is attempting to change lanes to said left adjacent lane, even when said turn signal (32L, 32R) of said host vehicle (HV) is in said blinking state.

4. The lane departure prevention apparatus according to any one of claims 1 to 3,
wherein,
said control unit (10) is configured to:
perform said lane departure prevention operation as said departure suppression support operation; and
permit performing at least said lane departure prevention operation for preventing said host vehicle (HV) from departing to an overtaking lane with respect to said host lane without cancelling said lane departure prevention operation if said rear approaching vehicle (RV) is present, even when said turn signal (32L, 32R) of said host vehicle (HV) is in said blinking state.

5. The lane departure prevention apparatus according to any one of claims 1 to 4,
wherein,
said control unit (10) is configured to:
perform said lane departure prevention operation as said departure suppression support operation (S335, S385); and
cancel a rightward departure prevention operation of said lane departure prevention operation, for preventing said host vehicle (HV) from departing from said host lane rightward, when a right turn signal (32R) among said turn signal (32L, 32R) is in said blinking state (S405, S420);
determine whether or not said rear approaching vehicle (RV) is attempting to change lanes to a right adjacent lane that is adjacent to said host lane rightward (S430);
permit performing at least said rightward departure prevention operation without cancelling performing said rightward departure prevention operation, if said rear approaching vehicle (RV) is attempting to change lanes to said right adjacent lane, even when said right turn signal (32R) is in said blinking state (S410);
cancel a leftward departure prevention operation of said lane departure prevention operation, for preventing said host vehicle (HV) from departing from said host lane leftward, when a left turn signal (32L) among said turn signal (32L, 32R) is in said blinking state (S435, S450);
determine whether or not said rear approaching vehicle (RV) is attempting to change lanes to a left adjacent lane that is adjacent to said host lane leftward (S460); and
permit performing at least said leftward departure prevention operation without cancelling performing said leftward departure prevention operation, if said rear approaching vehicle (RV) is attempting to change lanes to said left adjacent lane, even when said left turn signal (32L) is in said blinking state (S440).

6. The lane departure prevention apparatus according to claim 5,
wherein,
said control unit (10) is configured to:
permit cancelling said rightward departure prevention operation (S420), if said right turn signal (32R) of said host vehicle (HV) is in said blinking state (S405), only when there is said right adjacent lane to which said host vehicle can change lanes rightward from said host lane (S415); and
permit cancelling said leftward departure prevention operation (S450), if said left turn signal (32L) of said host vehicle (HV) is in said blinking state (S435), only when there is said left adjacent lane to which said host vehicle can change lanes leftward from said host lane (S445).

7. A lane departure prevention method comprising:
a step of performing, as a departure suppression support operation, at least one of an alert generation operation to generate an alert to a driver of a host vehicle (HV) and a lane departure prevention operation to apply a force in a direction for avoiding a departure of said host vehicle from a host lane to said host vehicle, when there is a probability that said host vehicle departs from said host lane (S335, S385, S735, S745, S750);
a step of cancelling performing said departure suppression support operation when a turn signal (32L, 32R) of said host vehicle (HV) is in a blinking state (S320-S330, S405, S420, S370-S380, S435, S450, S920, S720, S725); and
a step of permitting performing said departure suppression support operation without cancelling performing said departure suppression support operation (S410, S440, S960) when a rear approaching vehicle (RV) that is positioned in said host lane and is approaching said host vehicle from behind is present (S425, S455, S950), even when said turn signal (32L, 32R) of said host vehicle (HV) is in said blinking state.

8. A non-transitory storage medium storing a program, said program causing a computer applied to a host vehicle (HV) to implement:
a step of performing, as a departure suppression support operation, at least one of an alert generation operation to generate an alert to a driver of a host vehicle and a lane departure prevention operation to apply a force in a direction for avoiding a departure of said host vehicle from a host lane to said host vehicle, when there is a probability that said host vehicle departs from said host lane (S335, S385, S735, S745, S750);
a step of cancelling performing said departure suppression support operation when a turn signal (32L, 32R) of said host vehicle (HV) is in a blinking state (S320-S330, S405, S420, S370-S380, S435, S450, S920, S720, S725); and
a step of permitting performing said departure suppression support operation without cancelling performing said departure suppression support operation (S410, S440, S960) when a rear approaching vehicle (RV) that is positioned in said host lane and is approaching said host vehicle from behind is present (S425, S455, S950), even when said turn signal (32L, 32R) of said host vehicle (HV) is in said blinking state.
